Europäisches Patentamt

European Patent Office

Office européen des brevets

(11) Publication number: **0 264 096**
**A2**

## (12) EUROPEAN PATENT APPLICATION

(21) Application number: **87114901.9**

(22) Date of filing: **13.10.87**

(51) Int. Cl.⁴: **F16D 69/00**

(30) Priority: **14.10.86 US 917946**

(43) Date of publication of application:
**20.04.88 Bulletin 88/16**

(84) Designated Contracting States:
**AT BE CH DE ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Doxsee, Leigh Tucker**
**Ten Wood Road**
**Morristown New Jersey 07960(US)**

(74) Representative: **Wächtershäuser, Günter, Dr.**
**Tal 29**
**D-8000 München 2(DE)**

(54) Acrylic containing friction materials.

(57) The addition of fibrillated acrylic fiber to non-asbestos type friction material compositions provides marked improvement in the flexural strength and structural integrity of preforms used in the manufacture of friction elements. The consequent handling characteristics of the preform provides improvement in the manufacturing of the friction element.

EP 0 264 096 A2

## ACRYLIC CONTAINING FRICTION MATERIALS

### BACKGROUND OF THE INVENTION

This invention relates to the incorporation of an acrylic polymer pulp fiber into non-asbestos type friction materials for the purpose of improving the structural integrity of preforms. The preforms serve as an intermediate product in the manufacture of friction elements.

It has become desirable to find a replacement for asbestos containing friction materials because of health and safety hazards to people coming in contact with such materials. Numerous approaches to the replacement of asbestos have led to a substantial body of art that has resulted in at least three major categories of non-asbestos type formulations. They are: (1) semi-metallic materials, (2) organic non-asbestos materials, and (3) cold molding hydrocarbon materials. Such categories are generally illustrated by U.S. Patent Nos. 3,856,120; 4,137,214 and 4,125,496, respectively. Other typical non-asbestos formulations are included in U.S. Patent Nos. 4,278,584; 4,226,758; 4,226,759; and 4,219,452.

The elimination of asbestos from friction material formulations has created a substantial manufacturing problem. The problem is that the non-asbestos containing preforms, normally pressure formed at ambient temperatures prior to hot pressing and heat curing, do not possess acceptable structural integrity so as to be able to withstand subsequent handling and storage without breakage. On the other hand, asbestos-containing compositions possess the requisite structural integrity to withstand such handling. This invention solves the structural integrity problem encountered in non-asbestos preforms with the expedient of incorporating an effective amount of a pulp fiber form of an acrylic polymer into the friction material to ensure the attainment of sufficient structural integrity to withstand the subsequent handling and/or storage of the compact prior to further processing.

### SUMMARY OF THE INVENTION

The invention generally pertains to a non-asbestos type friction material composition, such as semi-metallic, organic non-asbestos or hydrocarbon cold forming types. The inventive composition is suitable for use as a friction element and is comprised of a thermosetting binder, a fibrous reinforcing material and an effective amount of an acrylic polymer pulp fiber to result in good structural integrity of preforms made from the friction material. It has been discovered that up to 15%, by weight, based upon the total weight of all other ingredients of the pulp fiber, may be preferably used. Upon forming a mixture of the friction material composition of the invention, a friction element may be manufactured by following the steps of compressing the mixture to form a preform, pressing the preform at elevated temperatures, treating said pressed material at a temperature sufficient to effect curing and then forming a friction element, such as disc brakes, friction pads, clutch linings and the like from the cured material by conventional steps.

### DETAILED DESCRIPTION OF THE INVENTION

It has been discovered that the so-called "green strength" of non-asbestos type friction material preforms can be substantially improved by the incorporation of relatively small amounts of fibrillated acrylic polymer fibers into the friction material. Acrylic pulp fibers may be typically included in amounts ranging from an effective amount to result in good structural integrity of the preform to about 15%, by weight, based on the total weight of all other ingredients. No particular advantage is seen to exceeding the 15% level due to economic considerations, and, hence, such upper level is contemplated. It is preferred to utilize from about 0.5% to 10% so as such amounts are adequate for insuring the attainment of good structural integrity of the preform and serve to optimize a flexural strength.

Preferred pulp fibers useful in the instant invention are fibrillated acrylic fiber wherein said fiber has a Canadian Standard Freeness (CSF) of less than 200 in combination with a Tensile Strength (TS), as will be defined herein, of at least 5 pounds per inch and preferably a CSF of less than 100. Preferred fibers are fibers having acrylonitrile contents of at least 85% (based on weight of acrylonitrile monomer content to total monomer content of the prepolymerization mixture). Particularly useful, fibers have polyacrylonitrile content in excess of about 89% and more preferably, between 89 and 90% on the same basis as set forth above. The preferred comonomers comprise methyl methacrylate which is preferably present at levels of at least about 10%, by weight, as discussed above. Other comonomers may be used without limitation provided that their inclusion does not materially detract from the ability of the fiber to be fibrillated nor with the properties of the fibrillated fiber produced. Compatibility of such other monomers can easily be determined by one skilled in the art by simple experimentation.

Extremely useful, fibrillated fibers and preferred for certain uses include fibers having a CSF of less than about 50 and/or a TS of at least about 7 pounds per inch. Fibrillated fibers having CSF of less than about 25 are very desirable providing fabrications of extreme utility.

The fibrillates acrylic fibers useful in the instant invention comprise in combination a Canadian Standard Freeness of less than 200 in combination with a Tensile Strength of at least 5 pounds per inch as will be hereinafter defined.

Canadian Standard Freeness is measured as is described in a test set forth in an article entitled "The Determination of Freeness" Standard C.1, Approved Method, October 1940, Revised May 1952, October 1962, September 1967, June 1969 and April 1972, prepared by the Physical and Chemical Standards Committee, Technical Section, Canadian Pulp & Paper Associates.

Tensile strength is measured according to Federal Standard 191 ATM 5100 as follows:
0.63g (Dry Weight) of the fibrillated fiber is slurred in 200 ml of water. This slurry is then added to a 12.5 cm ID Buchner funnel containing a liner of No. 1 Whatman filter paper. Vacuum is used to form a test sheet on the filter paper layer. The test sheet is then separated from the filter paper support and is dried to constant weight in an air oven at about 110°C. The resulting sheet is then cut into 1.0 inch strips which are evaluated for tensile strength to break according to Federal Standard 191 ATM 5100.

Preferably, fibrillated fibers having a CSF of below 100 and/or a Tensile Strength of at least 7 pounds inch are particularly useful, and fibers having CSF values below about 50 and 25 are found to have desirable and very desirable characteristics, respectively.

With regard to the fiber form which these fibrillated fibers are made, acrylic based fibers are preferable. In particular, those in which the acrylonitrile monomer contribution is at least 85%, by weight, of the fiber. By monomer contribution is meant the weight of the monomer employed in the reaction mixture based on the total weight of all monomer contained therein just prior to initiaton of the polymerization. Fibers with higher acrylonitrile monomer contribution are particularly preferred. Acrylic contents in excess of 89% are desirable and particularly preferred are compositions where the content exceeds 90%. While any compatible comonomer may be used, methyl methacrylate has been found to be particularly suitable especially when its monomer contribution is at least 10%, by weight. Inclusion of other comonomers can be made with simple experimentation based on the ancillary properties that they can provide provided that their inclusion does not materially detract from the ability to achieve the aforestated CSF and TS values critical to the instant invention. Without wishing to be bound by the theory, it is believed that fibers useful in producing the fibrillated fibers useful in the instant invention are those wherein the comonomer mix provides a fiber having lateral weakness and longitudinal strength. When using acrylic fibers, the preferred form of the invention the fibrillated fiber precursor can be made by conventional wet-spinning methods. In the best mode contemplated at the time of the filing of this application; wet-spun, gel, hot-stretched and uncollapsed acrylic fibers comprising about 90%, by weight, and 10%, by weight, acrylonitrile and methyl methacrylate monomer contributions are employed in their fibrillated form. Specifically, contemplated comonomers that also may be useful include other similar acrylates, such as, for example, ethyl acrylate. Similarly, homopolymers and copolymers of other fiber forming monoethylenically unsaturated monomers, such as vinylacetate, vinyl chloride, styrene, vinyl pyridine, acrylic esters, acrylamide and the like are within the scope of materials contemplated herein. Examples of still other copolymerizable monomers which are contemplated include those as described in U.S. 3,047,455.

The fibrillated fibers useful in the instant invention can be made using a modified commercial blender. In general, it has been found advantageous to use a modified Waring brand commercial blender wherein the as supplied blade has been modified to provide a break edge of about 0.25mm on the working edge. In operation a relatively dilute slurry or precursor fiber in water is introduced into the blender device which is then run for about at least one-half hour to about at least one hour depending upon the molecular weight of the fiber being used. With acrylic fiber having what is considered a high molecular weight, i.e. ca. 58,000, a process time as short as one-half hour was found to be adequate while with a material of what is considered a low molecular weight, i.e. ca. 48,000, a minimum of about an hour was required. For the invention the exact time of processing is not critical and will vary with the character and make-up of the precursor, i.e. molecular weight and monomer content and will be easily determined in view of this disclosure by simple experimentation. What has been found to be critical was control of the temperature of the slurry while it was being processed. In prior art techniques, and as will be demonstrated in the Examples to follow, no attention was paid to the heat of the slurry mixture. Irrespective of the normal starting temperatures, i.e. room temperature, the mechanical action of the processing resulted in imparting heat energy to the slurry and slurry temperatures in excess of about 50°C were experienced. Fibers produced thusly had CSF levels of about five-hundred to seven-hundred, and values of less than that were unable to be achieved prior to loss of useful Tensile Strength as defined by these improved fibers. Importantly, it was discovered that by providing means to maintain the temperature of the slurry in a lower range that the fibrillated fibers of the instant invention were obtainable for the first time. In general, slurry temperatures, when using this technique maintained below about 30°C, produced fibers within the scope of the instant invention. It is contemplated within the scope of the invention that variation of the slurry temperature in and around 20-30°C using the aforedescribed technique alone or in combination with variations of slurry solids content will enable infinite variation of the critical parameters of CSF in combination with TS as may be required for the end use of the fibrillated fiber.

It is recognized that use of the commercial blender as described above is somewhat limited with regard to the amount of the fiber of the invention which can be produced in any one batch. It has been found that larger amounts of the material can be produced using larger equipment. It is cautioned that many conventional cutting and beating devices have been attempted to date and do not produce fiber within the scope of that of the instant invention. It has been found that when a Daymax brand 10 gallon mixer was modified as per the modification on the smaller Waring device (i.e. ~0.25 break edge modification) 0.7% slurries of precursor maintained below 30°C and processed for about four hours produced fibrillated fiber within the scope of the invention.

Optionally, it has been found that use of a dispersant during processing, such as, for example, Aerosol OT-75, as available from American Cyanamid Company, Wayne, New Jersey, or any similar such material facilitates the processing. The exact blending parameters or the equipment employed are not limiting with regard to the scope of the invention and it is contemplated that such may be varied and modified with simple experimentation by one skilled in the art in view of this disclosure.

Three general types of non-asbestos type friction materials have evolved in the art. They are semi-metallic materials, organic non-asbestos materials and hydrocarbon cold forming materials.

Semi-metallic systems typically include phenolic resins; carbonaceous particles, such as graphite or carbon particles; non-asbestos fibers, such as those of steel, ceramic or carbon; ceramic powders, such as those of magnesium oxide, zircon, mullite and alumina; metal powders, such as those or iron, copper, brass and stainless steel; and other modifiers, such as elastomers and inorganic wear fillers.

Semi-metallic systems typically may contain the following amounts of the above constituents:

| Ingredient | Wt.% |
|---|---|
| Phenolic Resin | 4-13 |
| Graphite or Carbon Particles | 15-14 |
| Fibers[1] | 0-25 |
| Ceramic Powders[2] | 2.10 |
| Metal Powders[3] | 15-14 |
| Other Modifiers[4] | 0-20 |

[1] steel, ceramic or carbon fibers
[2] magnesium oxide, zircon, mullite, alumina
[3] iron, copper, brass, stainless steel
[4] elastomers, inorganic wear fillers.

In the manufacture of friction elements, the semi-metallic friction material constituents are mixed together to form a homogeneous mixture. The mixture is then pressed into preforms. The preforms are then transferred to a second press where pressure and heat are simultaneously applied, causing the resin to melt and flow through the piece forming a continuous matrix for holding the other ingredients. The lining pads are then transferred to curing ovens and cured at temperatures ranging from 300° to 600°F to further set the resins.

Organic non-asbestos systems typically include a thermosetting resin; cashew particles; non-asbestos fibers; and more than 20%, by weight, of a powdered inorganic compound having a Moh's hardness rating of greater than 2 and less than 5 and capable of being subjected to temperatures of greater than about 425°C without substantial chemical or physical alteration. Such components are described in greater detail in U.S. Patent No. 4,137,214 which patent is hereby incorporated by reference herein for the purpose of such additional description. Organic non-asbestos systems typically may contain the following amount of the above ingredients:

| Ingredient | Wt.% |
|------------|------|
| Thermosetting Resin | 10-30 |
| Cashew Nut Particles | 5-25 |
| Non-Asbestos Fibers | 5-15 |
| Inorganic Compound | 20-60 |

Another so-called organic non-asbestos friction material is disclosed in U.S. Patent No. 4,278,584. This patent discloses the following general formulation:

| Ingredient | Wt.% |
|------------|------|
| Phenol-formaldehyde Resin | 6-12 |
| Carbon Fibers | 10-40 |
| Steel Fibers | 30-60 |
| Inorganic and/or Organic Fillers | 10-20 |

Friction elements may be typically manufactured from organic non-asbestos mixtures by placing a quantity of the mixture in a mold and pressing at 1200 psi with a 10 second swell time in the mold to form a preform and then curing the preform at 300°F for 15 minutes at 4000 psi with degassing at the end of one and 2.5 minutes. The edges of the cured preform are then trimmed to remove excess material and the preform post-baked while under constraint in a forming containing to prevent swelling for a period of 8 hours. The temperature is increased heavily over a period of 1.5 hours to 400°F and then held at that point for the remaining period.

Hydrocarbon cold forming friction materials of the non-asbestos type may typically include at least two systems. The first system includes non-asbestos inorganic fibers, cellulose fibers, optionally carbon and/or graphite particles and a thermosetting organic binder comprising a hydroxyl terminated butadiene copolymer of the formula

$$HO + (CH_2-CH = CH-CH_2)_a - ( \underset{\underset{X}{|}}{C} H-CH_2)_b + {}_nOH$$

wherein x is phenyl or CN, a has a value of from 0.05 to 0.95, b has a value of from 0.005 to 0.5, and n is an integer from about 10 to 140, the binder having been cured with from about 0.1 to about 5 percent of a peroxide catalyst.

A second non-asbestos hydrocarbon cold forming system includes metallic materials, graphite particles bonded together when a thermosetting hydroxyl butadiene copolymer of the formula

$$HO + (CH_2-CH = CH-CH_2)_a-( \underset{\underset{X}{|}}{C} H-CH_2)_b + {}_nOH$$

wherein X is phenyl or CN, a has a value of from 0.5 to 0.95, b has a value of from 0.005 to 0.5, and n is an integer from about 10 to about 140, the copolymer having been cured with from about 0.02 to about 12.5 percent of a peroxide catalyst.

The components mentioned above for both systems are discussed in greater detain in U.S. Patent No. 4,125,496 which patient is hereby incorporated by reference for the purpose of such additional description.

The above mentioned systems typically may contain the following amounts of the above constituents:

| First System Ingredient | Wt.% |
| --- | --- |
| Inorganic Fibers | 20-70 |
| Cellulose Fibers | 5-25 |
| Coke Particles | 0-15 |
| Graphite Particles | 0-10 |
| Carbon Black | 0-15 |
| Thermosetting Organic Binder | 10-60 |

| Second System Ingredient | Wt.% |
| --- | --- |
| Metallic Material[1] | 15-75 |
| Graphite Particles | 5-20 |
| Thermosetting Organic Binder | 2-50 |

[1] Metal fibers, metal powder or admixtures

In the manufacture of friction elements, hydrocarbon cold molding formulations are typically uniformly mixed and then cold molded at pressures on the order of 2000 to 5000 psi to form a preform. Curing of the preform can be accomplished by heating at elevated temperatures on the order of about 350 to 600°F for a period of several hours.

Typical friction compositions are disclosed in Tables I and II. Examples 1-3 represent typical semi-metallic friction compositions, and Examples 4-14 represent typical organic non-asbestos friction compositions. In these formulations, American Cyanamid Creslan brand T-98 acrylic fiber and fibrillated Creslan brand T-98 fiber were employed and were added to the formulations in the amounts shown on a weight percentage of the formulation base. Following formulations the composite can be formed into preforms at a pressure of about 1500 psi at ambient temperature. Optionally, a percentage of the acrylic fiber or fibrillated fiber may be combined with other fibers, such as, for example, aramid polymer fiber or pulp, such as, for example, Kevlar brand fiber or pulp or for that matter, Kevlar 29 brand, Kevlar 49 brand or Nomex brand fiber commercially available from DuPont de Nemours, Wilmington, Delaware.

Addition of the acrylic fiber and fabrillated acrylic fiber enhances the green strength of the preform up to a level of about 10 wt.%. The strength advantage declines somewhat at levels about 10 wt.% but is still manifested at about 15 wt.%. Additionally, these fibers are effective to improve the structural integrity of the preform and that amounts up to on the order of about 15% are quite effective. A range of about 0.5 to 10 wt.% is preferred; the lower amount to ensure that adequate green strength improvement is obtained and the upper level to optimize the strengthening effect. Generally, due to considerations of flexural strength, it is preferred that less than about 4.5 wt.% fiber be added to the formulation. In general it is recommended that a range of from about 0.5 to 10 wt.% of pulp be utilized with a maximum of about 4 wt.% fiber to achieve an acceptable trade-off between strength and processability.

It is expected that the coefficient of friction may decrease somewhat with increasing pulp content, and therefore, pulp additions may also be used to influence the coefficient of friction of the ultimate product.

It is pointed out that all friction material composition ingredients, other than the acrylic fiber and fibrillated acrylic fiber are specified as weight percent. The fibrillated fiber and fiber are specified as a weight proportion of the fibrillated pulp and/or fiber to the total weight of all other friction material ingredients. In other words, a composition specifying 15%, by weight, of pulp would contain 100 parts, by weight, of all other ingredients and 15 parts, by weight, of pulp; the term "all other ingredients," as used in the specification and claims meaning all ingredients other than aramid polymers in pulp fiber and fiber form.

TABLE I

| SEMI-METALLIC FORMULATIONS | |
|---|---|
| Component | Wt.% |
| Phenolic Resin | 11 |
| Carbon Particles | 12 |
| Magnesium Oxide | 1 |
| Rubber Particles | 9 |
| Inorganic Particles | 23.5 |
| Inorganic Fibers | 12 |
| Steel Fibers | 41.5 |
| | 100.0 |

## TABLE II

| ORGANIC NON-ASBESTOS FORMULATIONS | |
| --- | --- |
| Component | Wt.% |
| Thermosetting resin | 10.8 |
| Carbonaceous Particles | 10.1 |
| Non-Asbestos Fibers | 7.2 |
| Organic Compounds | 11.7 |
| Inorganic Compounds | 50.2 |
| | 100.0 |

## TABLE III

| FRICTION COMPOSITIONS | | | |
| --- | --- | --- | --- |
| Example No. | Base Material | (Wt.%) | (Wt.%) |
| 1 | Semi-Met | -- | -- |
| 2 | Semi-Met | .5 | -- |
| 3 | Semi-Met | 1 | -- |
| 4 | Org. N.A. | -- | -- |
| 5 | Org. N.A. | 1 | -- |
| 6 | Org. N.A. | 5 | -- |
| 7 | Org. N.A. | 9 | -- |
| 8 | Org. N.A. | 10 | -- |
| 9 | Org. N.A. | 15 | -- |
| 10 | Org. N.A. | .5 | 4.5 |
| 11 | Org. N.A. | 2.5 | 2.5 |
| 12 | Org. N.A. | 4.5 | .5 |
| 13 | Org. N.A. | -- | 1 |
| 14 | Org. N.A. | -- | 5 |

EXAMPLE 15

A brake mix was prepared consisting of 227g of wollastonite #20204, 90.8g of Nyco barium sulfate, 68.1g Cardolite NC-126 (dry phenolic resin), and 68.1g of Cardolite NC 104-40 (cashew friction particles). The brake mix was ball milled for 30 minutes and blended in a Waring commercial blender for 30 seconds.

EXAMPLE 16

30g of the brake mix from Example 16 was blended in a Waring commercial blender for 10 seconds. The mix was placed uniformly in a 2 1/2" x 2 1/2" mold and pressed for 30 seconds at 10 tons in a Dake 50 ton press. The material was fragile and broke easily when handled.

30g of the brake mix was blended and pressed the same way except for a pressure of 20 tons for 20 minutes at 350°F. The material broke when removed from the mold.

EXAMPLE 17

26.25g of the brake mix from Example 15 and 3.75g of American Cyanamid Creslan brand T-98 acrylic was blended in a Waring commercial blender for 3, 10 second blends. The fiber was uniformly dispersed. The mix was placed in a 2 1/2" x 2 1/2" mold and pressed at 10 tons for 30 seconds in a Dake 50 ton press. The material was handleable and did not fall apart overnight. The above material was also pressed at 20 tons for 20 minutes at 350°F. The material was very handleable.

**Claims**

1. A non-asbestos type friction material composition suitable for use as a friction element comprising a thermosetting binder, a fibrous reinforcing material and an effective amount of a fibrillated acrylic fiber to result in good structural integrity of a preform manufactured from said friction material.

2. The friction material of Claim 1 wherein said fibrillated fiber has a Canadian Standard Freeness of less than 200 in combination with a Tensile Strength of at least 5 pounds per inch.

3. The friction material of Claim 2 wherein said fibrillated fiber has a Canadian Standard Freeness of less than 100.

4. The friction material of Claim 2 wherein the acrylonitrile monomer contribution to said fibrillated fiber is at least 85%, by weight.

5. The friction material of Claim 4 wherein a comonomer of said acrylonitrile comprises methyl methacrylate.

6. The friction material of Claim 4 wherein the acrylonitrile monomer contribution to said fibrillated fiber is at least about 89%, by weight.

7. The friction material of Claim 6 wherein a comonomer of said acrylonitrile comprises methyl methacrylate.

8. The friction material of Claim 4 wherein the acrylonitrile monomer contribution to said fibrillated fiber is about 89% to about 90%, by weight.

9. The friction material of Claim 8 wherein a comonomer of said acrylonitrile comprises methyl methacrylate.

10. The composition of Claim 2 wherein said non-asbestos type friction material is a member selected from the group consisting of semi-metallic material, organic non-asbestos material and hydrocarbon cold forming material.

11. The composition of Claim 10 wherein said fibrillated fiber is included in an effective amount of about 15%, by weight, based upon the total weight of all other ingredients.

12. The composition of Claim 10 wherein said fibrillated fiber is included in an amount from about 0.5% to 10%, by weight, based upon the total weight of all other ingredients.

13. The composition of Claim 10 wherein said non-asbestos type friction material is semi-metallic material.

14. The composition of Claim 13 wherein said semi-metallic material contains phenolic resin, carbonaceous particles, non-asbestos fibers, ceramic powders and metal powder.

15. The composition of Claim 14 wherein said semi-metallic material comprises
from 4 to 13 wt.% of phenolic resin,
from 15 to 40 wt.% of carbonaceous particles,
from 0.25 wt.% of non-asbestos fibers,
from 2 to 10 wt.% of ceramic powder, and
from 15 to 40 wt.% of metal powder.

16. The composition of Claim 10 wherein said non-asbestos type friction material is an organic non-asbestos material.

17. The composition of Claim 16 wherein said organic non-asbestos material contains a thermosetting resin, cashew nut particles, non-asbestos fibers and more than 20 wt.% of a powdered inorganic compound having a Moh's hardness rating of greater than 2 and less than 5 and capable of being subjected to temperatures of greater than about 425°C without substantial chemical of physical alteration.

18. The composition of Claim 17 wherein said organic non-asbestos material comprises from 10 to 30 wt.% thermosetting resin, from 5 to 25 wt.% cashew nut particles, from 5 to 15 wt.% non-asbestos fibers and 20 to 60 wt.% powdered inorganic compound.

19. The composition of Claim 16 wherein said organic non-asbestos material contains a phenolformaldehyde resin, carbon fibers and steel fibers.

20. The composition of Claim 29 wherein said non-asbestos material contains from 6 to 12 wt.% phenolformaldehyde resin, from 10 to 40 wt.% carbon fibers, from 30 to 60 wt.% steel fibers, and from 10 to 20 wt.% filler.

21. The composition of Claim 10 wherein said non-asbestos type friction material is a hydrocarbon cold forming material.

22. The composition of Claim 21 wherein said hydrocarbon cold forming material contains non-asbestos inorganic fibers, cellulose fibers and a thermosetting organc binder comprising a hydroxyl terminated butadiene copolymer of the formula:

$$HO + (CH_2-CH = CH-CH_2)_a - ( \underset{X}{C} H-CH_2)_b + {}_nOH$$

wherein x is phenyl or CN, a has a value of from 0.05 to 0.95, b has a value of from 0.005 to 0.5, and n is an integer from about 10 to 140, said binder having been cured with from about 0.1 to about 5 wt.% of a peroxide catalyst.

23. The composition of Claim 22 wherein said hydrocarbon cold forming material contains from about 20 to 70 wt.% non-asbestos inorganic fibers, from 5 to 25 wt.% cellulose fibers, 0 to 15 wt.% coke particles, 0 to 10 wt.% graphite particles, 0 to 15 wt.% carbon black and 10 to 60 wt.% of said thermosetting organic binder.

24. The composition of Claim 23 wherein said hydrocarbon cold forming material contains metallic materials, graphite particles, bonded together with a thermosetting hydroxyl butadiene copolymer of the formula:

$$HO + (CH_2-CH = CH-CH_2)_a-( \underset{X}{C} H-CH_2)_b + {}_nOH$$

wherein X is phenyl or CN, a has a value of from 0.5 to 0.95, b has a value of from 0.005 to 0.5, and n is an integer from about 10 to about 140, said copolymer having been cured with from about 0.02 to about 12.5 wt.% of a peroxide catalyst.

25. The composition of Claim 24 wherein said hydrocarbon cold forming material contains from 15 to 75 wt.% metallic material, from 5 to 50 wt.% graphite particles bonded together with about 2 to 50 wt.% of a thermosetting hydroxyl butadiene copolymer of the formula:

$$HO + (CH_2-CH = CH-CH_2)_a -( \underset{X}{C} H-CH_2)_b + {}_nOH$$

wherein X is phenyl or CN, a has a value of from 0.5 to 0.95, b has a value of from 0.05 to 0.5 and n is an integer from about 10 to 140, said copolymer having been cured with from about 0.02 to about 12.5 wt.% of a peroxide catalyst.

26. A method of making a preform of a non-asbestos type friction material, comprising: forming a mixture of a thermosetting binder, fibrous reinforcing material and an effective amount of a fibrillated acrylic polymer fiber to result in good structural integrity of said preform and compressing said mixture to form a preform.

27. The method of Claim 26 wherein said non-asbestos type friction material is a member selected from the group consisting of semi-metallic material, organic non-asbestos material and hydrocarbon cold forming material.

28. The method of Claim 27 wherein said fibrillated acrylic fiber is included in an effective amount up to 15%, by weight, based upon the total weight of all other ingredients.

29. The method of Claim 28 wherein said fibrillated acrylic fiber is included in an amount from 0.5 to 10%, by weight, based on the total weight of all other ingredients.

30. The method of Claim 29 wherein said non-asbestos type friction material is semi-metallic material.

31. The method of Claim 29 wherein said non-asbestos type friction material is organic non-asbestos material.

32. The method of Claim 29 wherein said non-asbestos type friction material is hydrocarbon cold forming material.

33. In a method of manufacturing a friction element which includes the steps of forming a mixture of a friction material composition, compressing said mixture to form a preform, curing said preform at an elevated temperature, and forming a friction element from said cured preform, wherein the improvement comprises including an effective amount of a fibrillated acrylic fiber to result in good structural integrity of the preform.

34. The method of Claim 33 wherein said compressing step is preformed at ambient temperature.

35. The method of Claim 33 wherein said non-asbestos type friction material is a member selected from the group consisting of semi-metallic material, organic non-asbestos material and hydrocarbon cold forming material.

36. The method of Claim 35 wherein said fibrillated acrylic fiber is included in an effective amount up to 15%, by weight, based upon the total weight of all other ingredients.

37. The method of Claim 36 wherein said fibrillated acrylic fiber is included in an amount from 0.5 to 10%, by weight, based upon the total weight of all other ingredients.

38. The method of Claim 37 wherein said non-asbestos type friction material is semi-metallic material.

39. The method of Claim 37 wherein said non-asbestos type friction material is organic non-asbestos material.

40. The method of Claim 37 wherein said non-asbestos type friction material is hydrocarbon cold forming material.